# FASCICULE DE BREVET EUROPEEN

(11) **EP 3 204 147 B1**
(45) Date de publication et mention de la délivrance du brevet: **20.05.2020**
(21) Numéro de dépôt: 15780810.6
(22) Date de dépôt: 08.10.2015
(51) Int. Cl.: B01D 53/94, B01J 37/02, B01J 23/42, B01J 23/44, B01J 23/46, B01J 23/48, B01J 35/04, F01N 3/10, F01N 3/28, B01J 23/40, B01J 23/63, B01J 27/224

(54) **DISPOSITIF DE CONVERSION CATALYTIQUE PRESENTANT UN TEMPS D'ACTIVATION REDUIT**
VORRICHTUNG ZUR KATALYTISCHEN UMWANDLUNG MIT REDUZIERTER AKTIVIERUNGSZEIT
DEVICE FOR CATALYTIC CONVERSION HAVING A REDUCED ACTIVATION TIME

(30) Priorité: 10.10.2014 FR 1459732
(43) Date de publication de la demande: 16.08.2017
(73) Titulaire: Commissariat à l'Énergie Atomique et aux Énergies Alternatives, 75015 Paris (FR)
(72) Inventeur: DONET, Sébastien, F-38112 Meaudre (FR); VANDENEYNDE, Aurélie, F-38000 Grenoble (FR)
(74) Mandataire: Brevalex
(86) Numéro de dépôt international: PCT/EP2015/073312
(87) Numéro de publication internationale: WO 2016/055596

(56) Documents cités:
- EP-A1- 1 243 335
- JP-A- H1 085 604
- JP-A- H01 127 045

## Description

### DOMAINE TECHNIQUE ET ÉTAT DE LA TECHNIQUE ANTÉRIEURE

La présente invention se rapporte à un dispositif de conversion catalytique présentant un temps d'activation réduit destiné à la dépollution des gaz, notamment à la dépollution des gaz d'échappement de véhicule automobile.

Les moteurs à combustion interne, notamment les moteurs diesel, produisent des gaz d'échappement contenant des oxydes d'azotes couramment désignés NOx, principalement composé de monoxyde d'azote NO, et du monoxyde de carbone CO.

On souhaite réduire ces émissions polluantes.

Des systèmes de dépollution sont prévus sur la ligne d'échappement pour traiter les gaz d'échappement, notamment pour réduire les NOx en N₂ et oxyder le CO en CO₂.

Un exemple de système de dépollution comporte un piège à NOx, ou NOx trap. Ce piège comporte un catalyseur de réduction dans les conditions diesel, qui nécessite périodiquement un apport de réducteurs via le moteur (par post injection du carburant), et permet une réduction de 60% à 70 % des NO mais provoque une surconsommation de 2g/km de CO₂.

Ce piège fonctionne par alternances successives sous régime pauvre et sous régime riche, la première phase correspondant au stockage des NOx dans les effluents gazeux en sortie du moteur, la deuxième phase correspond à leur réduction.

Le piège à NOx comporte un support généralement formé à partir d'un mélange d'alumine, de cérine voire de la zircone sur lequel sont déposés successivement un oxyde d'alcalin ou d'alcalino-terreux, par exemple du Ba ou Sr, puis des métaux précieux, par exemple du platine ou du Rhodium. Le Rhodium est majoritairement utilisé pour la réaction de réduction des oxydes d'azote alors que les éléments Platine et Palladium sont actifs pour l'oxydation de CO et des hydrocarbures.

Or, si l'oxydation catalytique des polluants ne pose pas de difficulté au sein du flux gazeux fortement oxydant sortant d'un moteur Diesel, la réduction des NOx en N₂ dans un tel milieu n'est pas totale.

Il existe d'autres pièges comportant un support en SiC recouverts de métaux précieux formant catalyseurs. Le SiC offre l'avantage de présenter une bonne conductivité thermique ce qui permet une montée en température rapide des catalyseurs qui sont actifs pour des températures comprises environ entre 150°C et 600°C, la montée en température étant provoquée par la chaleur des gaz d'échappement. Or cette bonne conductivité thermique a pour inconvénient de provoquer également une baisse rapide de la température du support des catalyseurs. Par ailleurs, le SiC est un matériau fragile et d'un coût important.

Il existe des convertisseurs catalytiques décrits dans le document US 6 986 247 comportant un générateur thermoélectrique pour produire de l'électricité à partir de la chaleur des gaz d'échappement et utiliser cette électricité pour chauffer les catalyseurs lorsque le véhicule est froid afin de réduire le temps d'activation des catalyseurs. Ces convertisseurs sont de réalisation complexe et mettent en œuvre un générateur thermoélectrique et des moyens pour stocker l'électricité produite par le générateur thermoélectrique.

Le document JP H10 85604 A décrit un autre dispositif de conversion catalytique.

### EXPOSÉ DE L'INVENTION

C'est par conséquent un but de la présente invention d'offrir un dispositif de conversion catalytique présentant une efficacité de conversion améliorée et étant de réalisation simplifiée par rapport aux dispositifs de l'état de la technique.

Le but précédemment énoncé est atteint par un dispositif comportant un support, par exemple en céramique, une couche de matériau isolant thermique sur le support et une couche de SiC poreux présentant une porosité comprise entre 55% et 70%, de préférence entre 60% et 65% sur la couche de matériau isolant et un ou des catalyseurs sur la couche de SiC poreux.

Ainsi on bénéficie de la bonne conductivité thermique du SiC mais sans avoir à gérer sa fragilité puisqu'il ne forme pas le support. Grâce à la bonne conductivité thermique du SiC, la montée en température lors du démarrage est rapide. De plus du fait de l'isolant thermique entre le support et le SiC, la chaleur est stockée dans le SiC, ce qui permet de maintenir la température pendant tout le fonctionnement ou au moins ralentir la baisse de température, ainsi les catalyseurs peuvent être maintenus dans un état d'activation ou à une température proche de l'activation, leur réactivation peut alors être rapide.

De manière avantageuse, le ou les catalyseurs sont déposés par dépôt chimique en phase vapeur, ce qui offre l'avantage d'abaisser la température d'activation du ou des catalyseurs, par exemple de 15°C.

En d'autres termes, on réalise un convertisseur catalytique dans lequel le support est dans un matériau résistant et de coût réduit et on réalise uniquement une couche en SiC qui assure la "thermalisation" du ou des catalyseurs assurant une activation plus rapide et plus durable de ceux-ci, ce qui permet de traiter très rapidement les gaz d'échappement au démarrage du moteur et d'assurer un traitement continu ou sensiblement continu des gaz. Ainsi la quantité de polluants contenue dans les gaz d'échappement effectivement rejetée dans l'air est sensiblement réduite par rapport à la quantité rejetée avec les dispositifs de l'état de la technique.

La présente invention a alors pour objet un dispositif de conversion catalytique comportant:
- un support en céramique muni d'au moins une surface,
- une barrière thermique comportant au moins un matériau isolant thermique recouvrant au moins une partie de ladite surface du support,
- du SiC poreux présentant porosité comprise entre 55% et 70%, de préférence entre 60% et 65% recouvrant au moins en partie la barrière thermique de sorte que le SiC soit séparé du support par la barrière thermique,
- un ou des catalyseurs de conversion au moins sur le SiC poreux.

La barrière thermique peut comporter au moins une couche, ladite couche étant dans au moins l'un des matériaux choisis parmi le TiN, le YSZ, le AIZ, TiAIN.

Avantageusement, une couche tampon est interposée entre le SiC et le ou les catalyseurs.

Le ou les matériaux de la couche tampon peuvent être choisis parmi CeO₂, ZrO₂, Al₂O₃, BaCO₃.

Le ou les catalyseurs peuvent être choisis parmi le Pt, Pd, Rh, Ag et une combinaison de ces métaux.

Dans un exemple avantageux, le support est en cordiérite ou en mullite.

Le support peut comporter des canaux, la surface du support étant formée par la surface intérieure des canaux.

La présente invention a également pour objet un dispositif de traitement des gaz d'échappement d'un moteur à combustion interne comportant au moins un dispositif de conversion catalytique selon l'invention.

La présente invention a également pour objet un procédé de réalisation d'un dispositif de conversion catalytique selon l'invention comportant les étapes:
a) réalisation d'un support en céramique,
b) formation d'une barrière thermique sur au moins une partie d'une surface dudit support,
c) formation de SiC poreux sur au moins une partie de ladite barrière thermique,
d) formation d'un ou de plusieurs catalyseurs de conversion sur le SiC. L'étape d) a avantageusement lieu par dépôt chimique en phase vapeur.

Lors de l'étape d) des catalyseurs d'oxydation et des catalyseurs de réduction peuvent être déposés. Les catalyseurs d'oxydation et les catalyseurs de réduction sont par exemple déposés lors de sous-étapes différentes.

Lors de l'étape b), une couche continue de SiC peut être formée puis ladite couche continue subit une étape de porosification, par exemple par chauffage entre 800°C et 1100°C.

### BRÈVE DESCRIPTION DES DESSINS

La présente invention sera mieux comprise sur la base de la description qui va suivre et des dessins en annexe sur lesquels:
- la figure 1 est une vue en perspective d'un exemple de support de conversion catalytique selon l'invention,
- la figure 2 est une représentation schématique d'une vue en coupe d'une zone du dispositif de conversion catalytique de la figure 1.

### EXPOSÉ DÉTAILLÉ DE MODES DE RÉALISATION PARTICULIERS

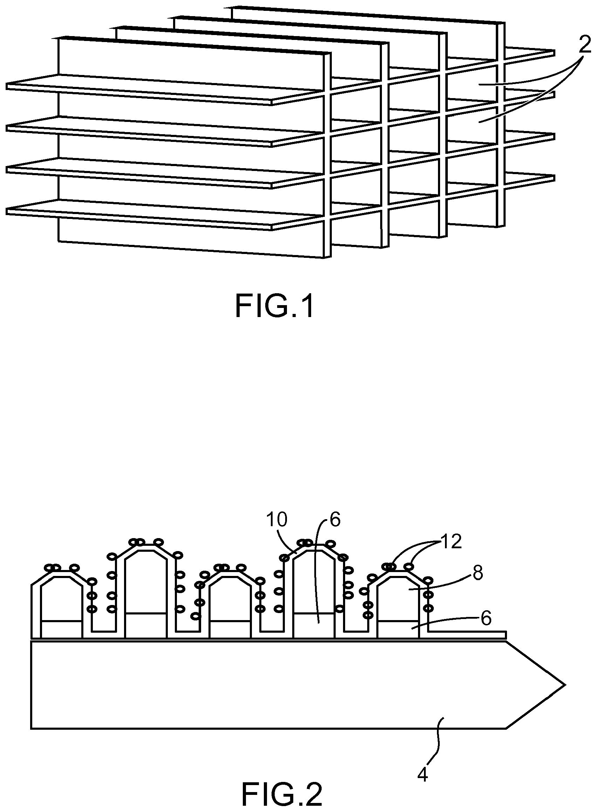

Sur la figure 1, on peut voir un exemple de dispositif de conversion catalytique selon l'invention. Le dispositif est destiné à être disposé dans un conduit d'échappement et à être traversé par l'ensemble du débit d'échappement. Le dispositif comporte une pluralité de canaux 2 s'étendant dans la direction du flux de gaz d'échappement. Les gaz d'échappement entrent en contact avec la surface intérieure des canaux qui comportent des catalyseurs provoquant la conversion par exemple des NOx en N₂ et du CO en CO₂. Dans l'exemple représenté, les canaux ont une section transversale carrée mais ils pourraient présenter une section hexagonale de sorte à se rapprocher d'une structure en nid d'abeille. Plus généralement les canaux présentent une section polygonale. Par ailleurs toute autre forme permettant un bon contact entre les gaz et le dispositif convient.

En variante, le dispositif pourrait comporter des canaux dont l'une de leurs extrémités serait obturée. Par exemple un canal, comportant une extrémité longitudinale obturée, serait entouré par des canaux comportant une extrémité longitudinale opposée qui serait obturée afin de forcer le gaz à traverser la paroi des canaux, celles-ci étant poreuses. Cette structure a pour effet d'augmenter le temps de présence des gaz dans le dispositif et donc d'augmenter la quantité de polluants convertis.

Sur la figure 2, on peut voir une vue en coupe de la paroi d'un canal 2 représentée schématiquement.

Le dispositif comporte un support 4 en matériau céramique tel qu'en mullite, cordiérite ou en céramique isotrope, le support forme le squelette du dispositif et comporte une pluralité de canaux parallèles les uns des autres. Le support est par exemple en matériau poreux avec une porosité comprise entre 30% et 70%.

La céramique du support est choisie de sorte à être moins fragile que le SiC et à présenter avantageusement un coût de revient réduit par rapport au SiC. En outre, le matériau du support 4 est isolant électrique et thermique.

La mullite et la cordiérite ont une conductivité thermique faible inférieure à 1 W.m.K.

Le dispositif comporte une barrière thermique 6 sur le support 4, la barrière thermique 6 comportant un ou des matériaux isolants thermiques 6, ces matériaux isolants thermiques recouvrant au moins en partie le support 4. La barrière thermique 6 peut comporter une ou plusieurs couches de matériaux isolants thermiques.

Le dispositif comporte également du SixCy poreux 8, avec 0<x<1 et 0<y<1, sur le matériau 6, une couche tampon 10 également appelée "wash-coat" sur le SixCy, et un ou plusieurs catalyseurs 12 sur la couche tampon 10 destinée à être en contact avec les gaz d'échappement.

A des fins de simplicité, le SixCy sera désigné par la suite SiC.

La porosité du SiC offre une surface développée importante ce qui permet soit de réduire la taille du support tout en conservant la même surface de SiC, soit d'augmenter la surface de SiC tout en conservant la même taille de support. En outre, le SiC poreux présente une structuration qui provoque une turbulence dans l'écoulement des gaz d'échappement ce qui améliore les contacts entre les gaz et les catalyseurs et facilites les réactions de conversion. La structuration du SiC poreux peut être suffisamment fine pour former une nanostructuration. Le SiC présente une porosité ouverte. Elle est comprise entre 55% et 70%, de préférence entre 60% et 65% déterminée par la méthode BET (théorie Brunauer, Emmet et Teller).

Le ou les matériaux formant une barrière thermique 6, par exemple formés d'une ou plusieurs couches, sont choisis par exemple parmi le TiN, le YSZ, le AIZ (mélange de Al₂O₃ et de ZrO₂ avec 5% et 30% de le ZrO₂), TiAIN. Le ou les matériaux formant la barrière thermique présentent une conductivité thermique de préférence inférieure à 10 W/m.K. Le YSZ présente l'avantage de stopper les fissures au sein du matériau.

Dans l'exemple représenté, la barrière thermique 6 est discontinue. Cette discontinuité peut provenir de la nature hétérogène du support. Un dispositif dans lequel la barrière thermique recouvrirait de manière continue le support ne sort pas du cadre de la présente invention.

La couche tampon 10 est par exemple en CeO₂, en ZrO₂, en Al₂O₃, en BaCO₃

Le ou les catalyseurs 12 sont choisis par exemple parmi le Pt, Pd, Rh, Ag ou une combinaison de ceux-ci.

De préférence, le ou les catalyseurs sont déposés sélectivement sur le SiC.

Il est à noter que le Pt et le Pd servent préférentiellement à oxyder le CO en CO₂ et le Rh sert préférentiellement à réduire les NOx en N₂.

A titre d'exemple le support a une épaisseur comprise entre 1 et 2mm, la couche de barrière thermique a une épaisseur comprise entre 20 µm à 250 µm, de préférence de l'ordre de 150 µm +/- 20 µm, la couche de SiC poreux a une épaisseur comprise entre 1 µm et 50 µm, de préférence comprise entre 5 à 10 µm et la couche de catalyseur qui peut être discontinue a une épaisseur comprise entre 4 et 12 nm.

Le fonctionnement du dispositif de conversion catalytique va maintenant être décrit. Nous considérerons la conversion des NOx en N₂.

Par exemple, le dispositif est disposé dans un conduit d'échappement. Au démarrage du moteur à combustion, le dispositif en particulier les catalyseurs sont froids et ne sont donc pas activés, ils ne sont donc pas aptes à convertir les NOx en N₂.

Les gaz d'échappement chauds entrent en contact avec la surface du dispositif qui est froid, or, du fait de la bonne conductivité thermique du SiC, sa température augmente rapidement d'autant plus que la barrière thermique 6 limite les pertes thermiques du côté du support. Le SiC rayonne alors la chaleur vers les catalyseurs qui voient donc leur température augmentée rapidement et se trouvent donc activés rapidement. Ils sont prêts à convertir les NOx en N₂ contenus dans les gaz d'échappement. La température d'activation est comprise environ entre 150°C et 600°C.

Par ailleurs, le SiC poreux forme des réservoirs thermiques puisqu'il est isolé thermiquement du support, il forme donc une source de chaleur disponible pour les catalyseurs, les maintenant à une température proche de la température d'activation voire à la température d'activation. Ainsi les périodes transitoires d'activation des catalyseurs pendant les phases d'arrête/démarrage sont écourtées, assurant une dépollution sensiblement en continu des gaz d'échappement.

Il en résulte une diminution, voire une suppression des NOx rejetés dans l'air.

Un procédé de réalisation du dispositif selon l'invention va maintenant être décrit.

Lors d'une première étape, un support en céramique par exemple en cordiérite ou en mullite est réalisé. Le support a par exemple la forme générale de la figure 1.

Lors d'une étape suivante, la barrière thermique 6 est formée sur le support.

Lors d'une étape suivante, le SiC poreux est formé sur la barrière thermique. Avantageusement, une couche de SiC continue est tout d'abord déposée puis cette couche subit une étape de porosification. La couche de SiC est par exemple réalisée par enduction par exemple au moyen d'un polysiloxane, ensuite cette couche est chauffée par exemple entre 800°C et 1100°C ce qui rend la couche poreuse.

Lors d'une étape suivante, le wash-coat est formé par exemple par imprégnation.

Lors d'une étape suivante, le ou les catalyseurs sont déposés sur le wash-coat.

De préférence, les catalyseurs sont déposés par dépôt chimique en phase vapeur ou CVD ("Chemical Vapor Déposition" en terminologie anglo-saxonne) et de préférence sélectivement sur le SiC.

Le dépôt par CVD sur le SiC poreux présente l'avantage de réduire la quantité de catalyseur nécessaire, puisque le dépôt se fait sélectivement sur le SiC. En effet, le dépôt des catalyseurs sur le SiC se fait à température plus faible que sur la cordiérite ainsi en chauffant à une température suffisante le SiC pour assurer le dépôt de catalyseur sur le SiC uniquement, on obtient un dépôt de catalyseurs uniquement sur le SiC. Cette réduction de la quantité requise de catalyseur est d'autant plus avantageuse qu'il s'agit généralement de métaux précieux. La quantité de catalyseurs requise peut être réduite jusqu'à 50%. Le dépôt CVD a lieu par exemple à une température comprise entre 300°C et 400°C. Pour effectuer le dépôt CVD, l'objet sur lequel on souhaite effectuer le dépôt est chauffé par exemple par rayonnement et est ensuite mis en contact avec un mélange gazeux contenant un précurseur dudit métal à déposer ou des précurseurs desdits métaux à déposer et/ou de leurs alliages.

Comme cela a été mentionné ci-dessus, le Pt et le Pd servent préférentiellement à l'oxydation du CO en CO₂ et le Rh sert préférentiellement à la réduction des NOx en N₂.

De préférence, les dispositifs de conversion catalytique comportent à la fois des catalyseurs d'oxydation et des catalyseurs de réduction.

De préférence, le dépôt de catalyseurs se fait en deux sous-étapes:

Par exemple, lors d'une première sous-étape, on effectue le dépôt du ou des catalyseurs d'oxydation par exemple Pt et/ou Pd, et lors d'une deuxième sous-étape on effectue le dépôt du ou des catalyseurs de réduction par exemple du Rh. Cet ordre n'est pas limitatif et les catalyseurs de réduction pourraient être déposés avant les catalyseurs d'oxydation.

Grâce à l'invention, les catalyseurs sont activés plus rapidement. Par exemple, en considérant le cycle de roulage normalisé NEDC (New European Driving Cycle) dans lequel les catalyseurs sont testés à froid, dans un dispositif de l'état de la technique, à partir d'un démarrage à froid les catalyseurs mettent environ 1 min à s'activer alors que dans un dispositif selon l'invention on réduit ce temps d'activation de 5 s à 20 s par cycle. En outre, les catalyseurs peuvent être activés en continu ou sensiblement en continu, la dépollution des gaz est donc améliorée. En outre, les turbulences provoquées par la nanostructuration des surfaces du dispositif de conversion favorisent encore davantage la conversion des polluants.

Par exemple par rapport aux procédés de dépollution dans les moteurs diesel imposant l'injection de carburant pour les catalyseurs de réduction, le dispositif selon l'invention permet d'éviter cette injection et donc permet un gain sur la quantité de CO₂ émise.

En outre, la structure du dispositif selon l'invention permet de réduire la quantité de métaux précieux par dépôt CVD, ce qui a également pour effet de diminuer la température d'activation des catalyseurs de l'ordre de 15°C, ce qui permet d'obtenir une activation des catalyseurs encore plus rapide.

Les catalyseurs déposés par CVD sur le SiC poreux présentent une structure facettée ce qui les rend plus actif, et une structure de taille contrôlée, par exemple comprise entre 4 à 12 nm. On obtient alors un rendement optimum entre la matière utilisée et la matière active.

Un dispositif de conversion catalytique de CO uniquement ou de NOx uniquement ne sort pas du cadre de la présente invention.

En outre, l'invention s'applique à la conversion catalytique de toute substance, le ou les catalyseurs étant choisis en fonction de la ou des substances à convertir.

De plus l'invention ne se limite pas à des dispositifs de conversion de gaz d'échappement pour véhicule automobile mais à tout système produisant des gaz à traiter.

## Revendications

1. Dispositif de conversion catalytique comportant:
- un support (4) en céramique muni d'au moins une surface
- une barrière thermique (6) en au moins un matériau isolant thermique recouvrant au moins une partie de ladite surface du support (4),
- du SiC poreux (8) recouvrant au moins en partie la barrière thermique (6) de sorte que le SiC (8) soit séparé du support par la barrière thermique (6), le SiC poreux (8) présentant une porosité comprise entre 55% et 70%, de préférence entre 60% et 65%.
- un ou des catalyseurs (12) de conversion au moins sur le SiC poreux.

2. Dispositif de conversion catalytique selon la revendication 1, dans lequel la barrière thermique comporte au moins une couche, ladite couche étant dans au moins l'un des matériaux choisis parmi le TiN, le YSZ, le AIZ, TiAIN.

3. Dispositif de conversion catalytique selon la revendication 1 ou 2, dans lequel une couche tampon (10) est interposée entre le SiC (8) et le ou les catalyseurs (12).

4. Dispositif de conversion catalytique selon la revendication 3, dans lequel le ou les matériaux de la couche tampon (10) sont choisis parmi CeO₂, ZrO₂, Al₂O₃, BaCO₃.

5. Dispositif de conversion catalytique selon l'une des revendications 1 à 4, dans lequel le ou les catalyseurs (12) sont choisis parmi le Pt, Pd, Rh, Ag, une combinaison de ces métaux.

6. Dispositif de conversion catalytique selon l'une des revendications 1 à 5, dans lequel le support (4) est en cordiérite ou en mullite.

7. Dispositif de conversion catalytique selon l'une des revendications 1 à 6, dans lequel le support (4) comporte des canaux (2), la surface du support (4) étant formée par la surface intérieure des canaux (2).

8. Dispositif de traitement des gaz d'échappement d'un moteur à combustion interne comportant au moins un dispositif de conversion catalytique selon l'une des revendications 1 à 7.

9. Procédé de réalisation d'un dispositif de conversion catalytique selon l'une des revendications 1 à 7, comportant les étapes:
a) réalisation d'un support en céramique,
b) formation d'une barrière thermique sur au moins une partie d'une surface dudit support,
c) formation de SiC poreux sur une partie au moins de ladite barrière thermique,
d) formation d'un ou de plusieurs catalyseurs de conversion sur le SiC.

10. Procédé de réalisation selon la revendication 9, dans lequel l'étape d) a lieu par dépôt chimique en phase vapeur.

11. Procédé de réalisation selon la revendication 9 ou 10, dans lequel lors de l'étape d) des catalyseurs d'oxydation et des catalyseurs de réduction sont déposés, et dans lequel les catalyseurs d'oxydation et les catalyseurs de réduction sont déposés lors de sous-étapes différentes.

12. Procédé de réalisation selon l'une des revendications 9 à 11, dans lequel lors de l'étape b), une couche continue de SiC est formée puis ladite couche continue subit une étape de porosification, par exemple par chauffage entre 800°C et 1100°C.

## Patentansprüche

1. Vorrichtung zur katalytischen Umwandlung, enthaltend:
- einen Träger (4) aus Keramik mit zumindest einer Fläche,
- eine Wärmesperre (6) aus zumindest einem wärmeisolierenden Material, das zumindest einen Teil der genannten Fläche des Trägers (4) bedeckt,
- poröses SiC (8), das die Wärmesperre (6) zumindest teilweise bedeckt, so dass das SiC (8) durch die Wärmesperre (6) vom Träger getrennt ist, wobei das poröse SiC (8) eine Porosität zwischen 55% und 70%, vorzugsweise zwischen 60 % und 65 %, aufweist,
- einen oder mehrere Umwandlungskatalysatoren (12) zumindest auf dem porösen SiC.

2. Vorrichtung zur katalytischen Umwandlung nach Anspruch 1,
wobei
die Wärmesperre zumindest eine Schicht enthält, wobei die Schicht aus zumindest einem der Materialien, ausgewählt aus TiN, YSZ, AIZ, TiAIN, besteht.

3. Vorrichtung zur katalytischen Umwandlung nach Anspruch 1 oder 2,
wobei
eine Pufferschicht (10) zwischen dem SiC (8) und dem bzw. den Katalysator(en) (12) eingefügt ist.

4. Vorrichtung zur katalytischen Umwandlung nach Anspruch 3,
wobei
das bzw. die Materialien der Pufferschicht (10) aus CeO₂, ZrO₂, Al₂O₃, BaCO₃ ausgewählt ist bzw. sind.

5. Vorrichtung zur katalytischen Umwandlung nach einem der Ansprüche 1 bis 4,
wobei
der bzw. die Katalysator(en) (12) aus Pt, Pd, Rh, Ag, einer Kombination dieser Metalle ausgewählt ist bzw. sind.

6. Vorrichtung zur katalytischen Umwandlung nach einem der Ansprüche 1 bis 5,
wobei
der Träger (4) aus Cordierit oder Mullit besteht.

7. Vorrichtung zur katalytischen Umwandlung nach einem der Ansprüche 1 bis 6,
wobei
der Träger (4) Kanäle (2) enthält, wobei die Fläche des Trägers (4) aus der Innenfläche der Kanäle (2) gebildet ist.

8. Vorrichtung zur Behandlung der Abgase einer Brennkraftmaschine, enthaltend zumindest eine Vorrichtung zur katalytischen Umwandlung nach einem der Ansprüche 1 bis 7.

9. Verfahren zum Herstellen einer Vorrichtung zur katalytischen Umwandlung nach einem der Ansprüche 1 bis 7, umfassend die Schritte:
a) Herstellen eines Trägers aus Keramik,
b) Ausbilden einer Wärmesperre auf zumindest einem Teil einer Fläche des Trägers,
c) Ausbilden von porösem SiC auf zumindest einem Teil der Wärmesperre,
d) Ausbilden von einem oder mehreren Umwandlungskatalysatoren auf dem SiC.

10. Herstellungsverfahren nach Anspruch 9,
wobei
der Schritt d) durch chemische Dampfphasenabscheidung erfolgt.

11. Herstellungsverfahren nach Anspruch 9 oder 10,
wobei
in Schritt d) Oxidationskatalysatoren und Reduktionskatalysatoren abgeschieden werden, und wobei die Oxidationskatalysatoren und die Reduktionskatalysatoren in verschiedenen Teilschritten abgeschieden werden.

12. Herstellungsverfahren nach einem der Ansprüche 9 bis 11,
wobei
in Schritt b) eine durchgehende Schicht aus SiC gebildet wird, wonach die durchgehende Schicht einem Schritt der Porosierung unterzogen wird, beispielsweise durch Erhitzen auf 800°C bis 1100°C.

## Claims

1. Device for catalytic conversion comprising:
- a ceramic support (4) provided with at least one surface,
- a thermal barrier (6) made from at least one thermal insulating material covering at least one part of said surface of the support (4),
- porous SiC (8) at least partially covering the thermal barrier (6) such that the SiC (8) is separated from the support by the thermal barrier (6), in which the porosity is between 55% and 70%, preferably between 60% and 65%.
- one or more conversion catalysts (12) at least on the porous SiC.

2. Device for catalytic conversion according to claim 1, wherein the thermal barrier includes at least one layer, said layer being made from at least one of the materials chosen from TiN, YSZ, AIZ, TiAIN.

3. Device for catalytic conversion according to claim 1 or 2, wherein a buffer layer (10) is inserted between the SiC (8) and the one or more catalysts (12).

4. Device for catalytic conversion according to claim 3, wherein the one or more materials of the buffer layer (10) are chosen from CeO₂, ZrO₂, Al₂O₃, BaCO₃.

5. Device for catalytic conversion according to one of claims 1 to 4, wherein the one or more catalysts (12) are chosen from Pt, Pd, Rh, Ag or a combination of said metals.

6. Device for catalytic conversion according to one of claims 1 to 5, wherein the support (4) is made from cordierite or mullite.

7. Device for catalytic conversion according to one of claims 1 to 6, wherein the support (4) comprises channels (2), the surface of the support (4) being formed by the inner surface of the channels (2).

8. Device for treating the exhaust gases of an internal combustion engine comprising at least one device for catalytic conversion according to one of claims 1 to 7.

9. Method for manufacturing a device for catalytic conversion according to one of claims 1 to 8, comprising the following steps:
a) production of a ceramic support,
b) formation of a thermal barrier on at least one part of a surface of said support,
c) formation of porous SiC on at least one part of said thermal barrier,
d) formation of one or more conversion catalysts on the SiC.

10. Method of manufacture according to claim 9, wherein step d) takes place by chemical vapour deposition.

11. Method of manufacture according to claim 9 or 10, wherein in step d), oxidation catalysts and reduction catalysts are deposited, and wherein the oxidation catalysts and the reduction catalysts are deposited in different sub-steps.

12. Method of manufacture according to one of claims 9 to 11, wherein in step b), a continuous layer of SiC is formed; said continuous layer then undergoes a porosification step, for example by heating to between 800°C and 1100°C.
